# EUROPEAN PATENT APPLICATION

(11) **EP 4 509 293 A1**
(43) Date of publication of application: **19.02.2025**
(21) Application number: 23192211.3
(22) Date of filing: 18.08.2023
(51) Int. Cl.: B29C 65/18, B29C 65/48, B29C 65/50, B29C 65/54, B29C 65/00, C09J 163/00, C09J 171/00, F03D 1/06, B29C 65/10, B29C 65/14, B29L 31/08

(54) **METHOD OF JOINING A FIRST BLADE MODULE AND A SECOND BLADE MODULE OF A BLADE FOR A WIND TURBINE**

(71) Applicant: Siemens Gamesa Renewable Energy A/S, 7330 Brande (DK)
(72) Inventor: Stecher, Harald, 9520 Skørping (DK)
(74) Representative: SGRE-Association

(57) **Abstract**

It is described a method of joining a first blade module (1) and a second blade module (2) of a blade (3) for a wind turbine to each other, the method comprising steps of: Applying a hot melt adhesive layer (4) to an inner or outer shell surface (5) of the first blade module (1) and/or an inner or outer shell surface (6) of the second blade module (2); Aligning the first and second blade modules (1, 2) to each other with a joining insert (7) arranged at a joining interface of the first and second blade modules (1, 2) so that the joining insert (7) is in contact with the hot melt adhesive layer (4); Heating the hot melt adhesive layer (4); and Joining the first and second blade modules (1, 2) via the joining insert (4) to each other by vacuum infusion, wherein the joining insert (4) is materially bonded to the first and second blade modules (1, 2).

## Description

### Field of invention

The present invention relates to a method of joining a first blade module and a second blade module of a blade for a wind turbine, to a blade for a wind turbine and to a method of repairing a blade of a wind turbine.

WO 2020/244 902 A1 describes a method for manufacturing a wind turbine blade, comprising the steps of arranging a joining portion comprising a fibre lay-up inside adjacent blade sections; covering the joining portion and the adjacent blade sections at least partially with a vacuum bag; and applying vacuum to a space covered by the vacuum bag, infusing at least the fibre lay-up with a resin and curing the resin to obtain a cured joining portion joining the blade sections inside.

Similar methods are also known from WO 2021/073842 A1 and WO 2015/189338 A1.

For the joining of composite parts or the repair of cracks and defects, vacuum infusion can be applied to achieve a similar structure and performance as of the underlying structure. However, the quality of the joined composite parts is often impaired, particularly when the composite parts contain core materials like balsa wood or PET foam.

### Summary of the Invention

There may be a need for improving the quality of the joined composite parts. This need may be met by the subject matters according to the independent claims. The present invention is further developed as set forth in the dependent claims.

According to a first aspect of the invention, a method of joining a first blade module and a second blade module of a blade for a wind turbine to each other is provided. The method comprises steps of: Applying a hot melt adhesive layer to an inner or outer shell surface of the first blade module and/or an inner or outer shell surface of the second blade module; Aligning the first and second blade modules to each other; Arranging a joining insert at a joining interface of the first and second blade modules so that the joining insert is in contact with the hot melt adhesive layer; Heating the hot melt adhesive layer; and Joining the first and second blade modules via the joining insert to each other by vacuum infusion, wherein the joining insert is materially bonded to the first and second blade modules.

In the context of the present invention, the expression "vacuum infusion" may refer to a procedure that uses vacuum to drive an infusion resin into a substrate, for instance into a fibre-reinforced resin laminate or a reinforcement material. The dry substrate material can be placed into a mold, and a vacuum is applied before the infusion resin is introduced. Once a sufficient vacuum is achieved, the infusion resin is sucked into the substrate. Just for example, if the joining insert comprises a dry substrate material as raw material, it can be materially bonded to the first and second blade modules by means of the infusion resin which is driven into the dry substrate material in the vacuum infusion step. If the joining insert comprises some resin containing substrate material as raw material, the material bond can be achieved or supported by this resin material.

In the context of the present invention, the expression "hot melt adhesive layer" may refer to a layer comprising an adhesive compound which melts or liquifies by the application of heat. Advantageously, the hot melt adhesive layer does not need any explicit curing step, which can give a significant time saving. For example, when a vacuum leak on the shell surfaces is found, it can quickly be closed by locally applying a layer of the hot melt adhesive layer. No extra liquid resin or adhesive need to be handled. The hot melt adhesive layer can offer structural properties almost on par with the bulk infusion resin. The layer thickness can be fully controlled over the whole surface to be sealed. No further activation of the surface is necessary before the infusion process. A lay-up of materials for the (second) infusion on top of the hot melt adhesive layer can start right after the hot melt adhesive layer has cooled down.

The order of steps can be varied as desired. For example, the application of the hot melt adhesive layer can be performed before the step of aligning the first and second blade modules to each other. Alternatively, the application of the hot melt adhesive layer can be performed after the step of aligning the first and second blade modules to each other. In this case, the hot melt adhesive layer can be applied simultaneously to the inner or outer shell surface of the first blade module and to the inner or outer shell surface of the second blade, so that the procedure is time saving.

The joining insert is usually arranged at the joining interface of the first and second blade modules after the application of the hot melt adhesive layer, but the joining insert can be arranged at the joining interface of the first and second blade modules simultaneously with, after or even before the step of aligning the first and second blade modules to each other.

The step of heating the hot melt adhesive layer can be performed before or after aligning the first and second blade modules to each other, and before or after the step of arranging the joining insert at the joining interface of the first and second blade modules. The steps of applying the hot melt adhesive layer and of heating the hot melt adhesive layer can be performed simultaneously, for example by means of a hot iron which can have the shape of a roller. However, a preferred order of steps is that as disclosed in the summary above.

The present invention advantageously uses the hot melt adhesive layer having a high compatibility with the liquid resin used in the vacuum infusion process and good adhesion properties to a composite surface of the first and second blade modules for sealing the surfaces around the joining interface. The application of the hot melt adhesive layer has further advantages against a treatment of the shell surfaces with a prepreg or a thin layer of liquid resin, because the prepreg or resin must be cured and the shell surface must be activated for sufficient adhesion to an infusion resin.

In an embodiment, the hot melt adhesive layer is free of a prepreg, a liquid resin, or a liquid adhesive, and/or wherein the method is free of a step of curing the heated hot melt adhesive layer.

In an embodiment, the hot melt adhesive layer comprises a non-reactive material, preferably a material based on epoxy-amine polymer chains and/or an epoxy material, and/or a reactive material, preferably a polyurethane and/or a recyclate material.

In an embodiment, the hot melt adhesive layer comprises a compound having a chemical structure of general formula I or of general formula II depicted below, 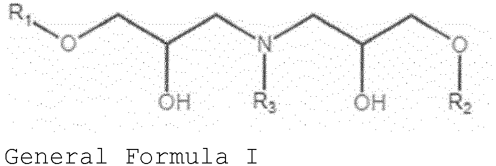 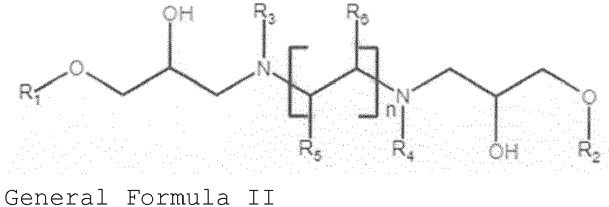 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

In an embodiment, the compound having the chemical structure of general formula I or of general formula II is present in the form of a film, preferably having a film thickness between 25 and 150 µm. It turned out that the film thickness within this range ensures an excellent impermeableness of the blade modules which is advantageous for the given purpose of joining the blade modules of the blade for a wind turbine via vacuum infusion.

In an embodiment, the step of applying the hot melt adhesive layer comprises at least one of the following: Cutting the hot melt adhesive layer into a desired shape; Placing the hot melt adhesive layer at the shell surface of the first blade module and/or the shell surface of the second blade module and punctually fixing the hot melt adhesive layer at spots.

In an embodiment, the step of heating the hot melt adhesive layer comprises at least one of the following: Ironing the hot melt adhesive layer by means of a hot iron; Applying hot air from a heat gun, infrared light from an infrared light source and/or a heating blanket to the hot melt adhesive layer; Pressing the heated hot melt adhesive layer by means of a tool, preferably a Teflon^{®}-coated tool, to the shell surface of the first blade module and/or the shell surface of the second blade module; Heating the hot melt adhesive layer to a temperature between 100 and 150 °C.

In an embodiment, the joining insert can comprise at least one layer of a substrate having fibres embedded therein, for example a fibre-reinforced resin laminate. The substrate of the joining insert can be formed with or without resin. The fibres can be made of glass or carbon, for example carbon pultruded elements.

In an embodiment, in the step of aligning the first and second blade modules, the joining insert is inserted into at least one first recess of the first blade module and into at least one second recess of the second blade module, wherein the at least one first recess and the at least one second recess together form at least one common recess.

In an embodiment, the at least one first recess and/or the at least one second recess comprises a tapered recess portion, and the joining insert comprises a complementarily tapered portion, wherein a depth of the tapered recess portion gradually decreases towards an end of the first blade module and/or the second blade module, respectively.

In an embodiment, the first blade module comprises a plurality of first recesses, and the second blade module comprises a plurality of second recesses.

In an embodiment, the at least one common recess is arranged at a leading edge, a trailing edge, a pressure side, and/or a suction side of the first and second blade modules.

In an embodiment, the at least one common recess comprises a continuous recess portion around an entire circumference of the first and second blade modules.

According to a second aspect of the invention, a blade for a wind turbine is provided. The blade comprises a first blade module and a second blade module, wherein the first and second blade modules are aligned to each other with a joining insert arranged at a joining interface of the first and second blade modules; a hot melt adhesive layer is arranged between the joining insert and an inner or outer shell surface of the first blade module and/or an inner or outer shell surface of the second blade module; and the first and second blade modules are joined to each other via the joining insert, wherein the joining insert is materially bonded to the first and second blade modules.

According to a third aspect of the invention, a method of repairing a blade for a wind turbine is provided. The method comprises steps of: Applying a hot melt adhesive layer to a defective location on an inner or outer shell surface of the blade; Arranging an insert on the hot melt adhesive layer; Heating the hot melt adhesive layer before or after arranging the insert; and joining the insert to the blade by vacuum infusion, wherein the insert is materially bonded to the blade.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows schematically an embodiment of a blade for a wind turbine;
- Fig. 2: shows an embodiment of a step of heating a hot melt adhesive layer;
- Fig. 3: shows an embodiment of a method of joining a first blade module and a second blade module;
- Fig. 4: shows an embodiment of a method of joining a first blade module and a second blade module.

### Detailed Description

The illustrations in the drawings are schematically. It is noted that in different figures, similar or identical elements are provided with the same reference signs.

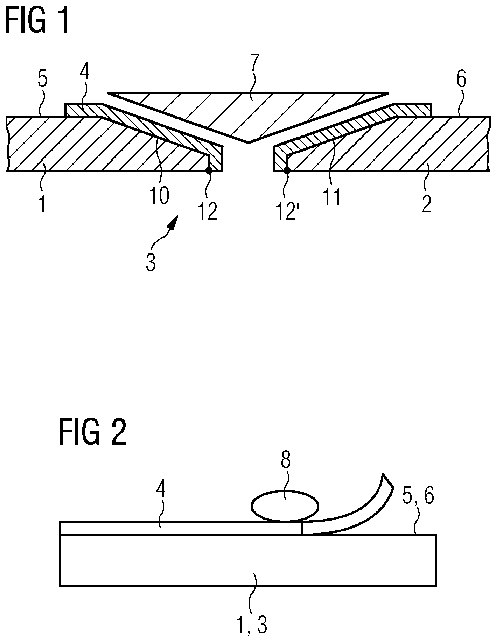

**Fig. 1** shows schematically an embodiment of a blade 3 for a wind turbine, the blade 3 comprising a first blade module 1 and a second blade module 2. The first and second blade modules 1, 2 are aligned to each other with a joining insert 7 arranged at a joining interface of the first and second blade modules 1, 2. The joining insert 7 can comprise one or more layers of a substrate having reinforcement fibres embedded therein, for example dry substrate layers, prepreg layers or a fibre-reinforced resin laminate. The joining insert 7 can generally be formed with or without resin. The first blade module 1 comprises an end 12, and the second blade module2 comprises an end 12', both ends 12, 12' preferably are facing each other with a clearance there between. In this embodiment, the joining insert 7 is arranged outside the first and second blade modules 1, 2.

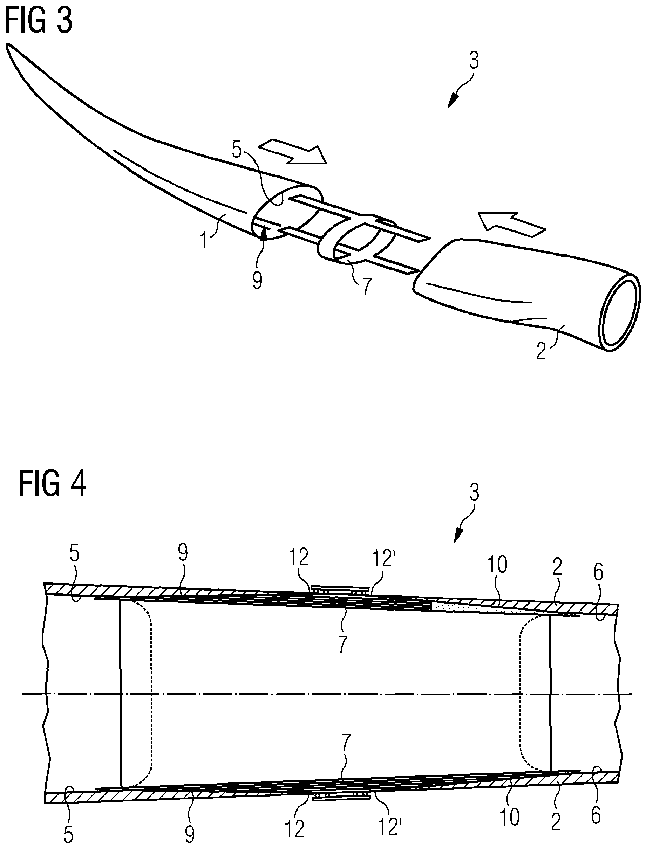

A hot melt adhesive layer 4 is arranged between the joining insert 7 and outer shell surfaces 5, 6 of the first and second blade modules 1, 2. However, in an alternative modification (for example as shown in Fig. 4), the hot melt adhesive layer 4 can also be arranged between the joining insert 7 and an inner shell surface of the first blade module 1 opposed to the outer shell surface 5 of the first blade module 1 and an inner shell surface of the second blade module 2 opposed to the outer shell surface 6 of the second blade module 2. In this alternative modification, the joining insert 7 would be arranged inside the first and second blade modules 1, 2.

In a further modification, the hot melt adhesive layer 4 does not need to be applied on both of the first and second blade modules 1, 2, i.e., the hot melt adhesive layer 4 can be applied to only one of the first and second blade modules 1, 2. For example, if only one of the first and second blade modules 1, 2 contains core materials like balsa wood or PET foam which could impair the tightness of the material, the hot melt adhesive layer 4 an be applied only on this blade module.

The first and second blade modules 1, 2 are joined to each other via the joining insert 7 by vacuum infusion, wherein the joining insert 7 is materially bonded to the first and second blade modules 1, 2. For example, material bonds can be all connections in which the connecting partners are held together by atomic or molecular forces. At the same time, they can form a non-detachable compound that can usually be separated by destruction.

A method of joining the first blade module 1 and the second blade module 2 of the blade 3 for a wind turbine to each other is described. The method generally comprises steps of applying the hot melt adhesive layer 4 to the inner or outer shell surface 5 of the first blade module 1 and/or an inner or outer shell surface 6 of the second blade module 2; aligning the first and second blade modules 1, 2 to each other; arranging a joining insert 7 at a joining interface of the first and second blade modules 1, 2 so that the joining insert 7 is in contact with the hot melt adhesive layer 4; heating the hot melt adhesive layer 4; joining the first and second blade modules 1, 2 via the joining insert 4 to each other by vacuum infusion, wherein the joining insert 4 is materially bonded to the first and second blade modules 1, 2.

The hot melt adhesive layer 4 has a high compatibility with a liquid resin contained in the joining insert 7 and a good adhesion to the shell surfaces 5, 6 of the first and second blade modules 1, 2 to achieve a good sealing effect. The hot melt adhesive layer 4 should preferably be dry to touch and can preferably be activated by temperature between 100 and 150 °C.

The hot melt adhesive layer 4 can be free of a prepreg, a liquid resin, or a liquid adhesive, and the method can be free of a step of (actively) curing the heated hot melt adhesive layer 4. For example, the hot melt adhesive layer 4 can comprise a non-reactive material with reduced HSE risks, preferably a material based on epoxy-amine polymer chains and/or an epoxy material, and/or a reactive material, preferably a polyurethane and/or a recyclate material. For example, the hot melt adhesive layer 4 can comprise a compound having a chemical structure of general formula I or of general formula II depicted below, 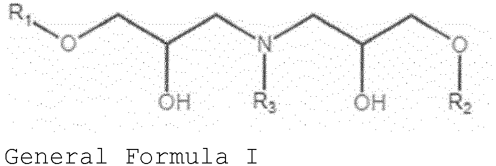 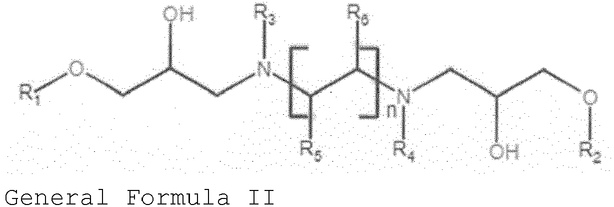 wherein
R1, R2, R3, R4, R5 and R6 independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

The compound having the chemical structure of general formula I or of general formula II can be present in the form of at least one selected from the group consisting of a film, a mesh, a fabric, a fleece, a veil and a felt.

The step of applying the hot melt adhesive layer 4 can comprise at least one of the following: cutting the hot melt adhesive layer 4 into a desired shape; and/or placing the hot melt adhesive layer 4 at the shell surface 5 of the first blade module 1 and/or the shell surface 6 of the second blade module 2 and punctually fixing the hot melt adhesive layer 4 at spots to ease the further placement of the hot melt adhesive layer 4.

**Fig. 2** shows an embodiment of the step of heating the hot melt adhesive layer 4, which comprises ironing the hot melt adhesive layer 4 by means of a hot iron 8. Application by ironing is preferred because both temperature and pressure can be applied, and the process can be easily controlled by the operator. Also, complex shapes can be sealed by the hot melt adhesive layer 4.

However, other processes can be performed in the step of heating the hot melt adhesive layer 4, for example applying hot air from a heat gun, applying infrared light from an infrared light source and/or applying a heating blanket to the hot melt adhesive layer 4. Furthermore, the heated hot melt adhesive layer 4 can be pressed by means of a tool, preferably a Teflon^{®}-coated tool, to the shell surface 5 of the first blade module 1 and/or the shell surface 6 of the second blade module 2. The heating of the hot melt adhesive layer 4 is preferably performed at a temperature between 100 and 150 °C.

**Figures 2** **and** **3** show another embodiment of the method of joining a first blade module 1 and a second blade module 2. In the step of aligning the first and second blade modules 1, 2, the joining insert 7 is inserted into at least one first recess 9 of the first blade module 1 and into at least one second recess 10 of the second blade module 2, wherein the at least one first recess 9 and the at least one second recess 10 together form at least one common recess. In this embodiment, the joining insert 7 is arranged inside the first and second blade modules 1, 2.

The at least one first recess 9 and the at least one second recess 10 can comprise a tapered recess portion, and the joining insert 7 can comprise a complementarily tapered portion, wherein a depth of the tapered recess portion gradually decreases towards ends 12, 12' of the first blade module 1 and the second blade module 2, respectively.

As shown in Fig. 3, the first blade module 1 can comprises a plurality of first recesses 9, and the second blade module 2 can also comprise a plurality of second recesses 10.

The at least one common recess can be arranged at a leading edge, a trailing edge, a pressure side, and/or a suction side of the first and second blade modules 1, 2. The recesses at the leading edge, the trailing edge, the pressure side, and/or the suction side of the first and second blade modules 1, 2 can partially overlap which each other. In particular, the at least one common recess can comprise a continuous recess portion around an entire circumference of the first and second blade modules 1, 2.

When joining the first and second blade modules 1, 2 by vacuum infusion (either to provide the blade 3 in full length or to provide a section of a blade 3 eventually to be joined with one or more other modules to provide a blade in full length), the shell surfaces 5, 6 of the first and second blade modules 1, 2 to be joined obtain a sufficient vacuum tightness for the infusion quality to be sufficient by the hot melt adhesive layer 4.

The first and second blade modules 1, 2 can be pre-casted root and tip modules, which can be joined by the fibre based joining insert 7 extending into both root and tip modules 1, 2. The joining insert 7 is preferably made of a dry material, but also pre-cased components would be applicable. When the joining insert 7 is placed and the first and second blade modules 1, 2 are aligned up against each other, the joining insert 7 can be subjected to a resin-based casting procedure as to make a permanent joint. The joining insert 7 has or may comprise elements therefor, preferably, sections to join load carrying structures e.g., a spar cap of the blade 3. That is, the root module and the tip module usually comprise at least suction and pressure side spar-cap(s) to be joined.

Note that a tip module can be a module that may comprise a blade tip as shown in Fig. 3, or at least a module that extends towards the tip of a complete blade 3, likewise the root module may comprise a blade root to be joined to a hub of the wind turbine as shown in Fig. 3, for example the root module can directly be attached to a blade bearing at the hub or at least a module that extends towards the root of a complete blade - thus a modular blade may comprise more than two modules.

Typically, the root and tip each module each comprise the outwardly tapered first and second recesses 9, 10, respectively, such that the first and second recesses 9, 10 form the common recess, and the joining insert 7 can be arranged inside the adjacent first and second blade modules 1, 2 by arranging the joining insert 7 into the common recess. Note that any joints other than tapered joints would also be an option, including same or different joints of the root module and the tip module.

Note that the first and second blade modules 1, 2 may also be joined by one or more recesses 9, 10 that do not extend in full circumference of the first and second blade modules 1, 2 at the joining interface, i.e., one or more independently recesses 9, 10 can be formed in the first and second blade modules 1, 2. In the joint condition, both opposed first and second recesses 9, 10 form one common recess wherein a safe joint can be established.

For example, two common recesses can be formed at the leading edge and the trailing edge and/or at the suction side and pressure side. A pressure side recess, a suction side recess, a leading edge recess and a trailing edge recess can also be arranged to overlap each other to form a single recess around the circumference of the tip module and the root module, e.g., a substantially continuous scarf joint around the circumference of the wind turbine blade 3 or a section of the blade 3.

Comparing Figures 1 and 4, the joining procedure in Fig. 4 is performed from the inside of the blade 3, whereas the joining procedure in Fig. 1 is performed from outside of the blade 3. Both are equally applicable to the present invention - and may find use depending on where a split on the blade 3 is located and space available within the blade 3 at the joining interface, e.g.:
1) the outside joining procedure is advantageous if the joining interface is located outboard of the blade 3 towards the tip as space inside the blade 3 is limited in that region, whereas
2) either the outside and the inside joining procedure can be used if the joining interface is located in the inboard part of the blade 3, but the inside joining procedure would be more feasible than at an outboard joint as space inside the blade 3 would be higher here i.e., to allow a presence of equipment and personal to stand.

The present invention is not limited to a method of joining the first blade module 1 and the second blade module 2 of the blade 3 but is likewise applicable in a method of repairing a blade 3 for a wind turbine. Referring to the reference signs in Figures 1 to 4, the method of repairing comprises steps of: Applying a hot melt adhesive layer 4 to a defective location (instead of applying the hot melt adhesive layer 4 to a joining interface of the first and second blade modules 1, 2) on an inner or outer shell surface 5, 6 (similar to the inner or outer shell surfaces 5, 6 of the first and second blade modules 1, 2) of the blade 3; Arranging an insert 7 (instead of the joining insert 7) on the hot melt adhesive layer 4; Heating the hot melt adhesive layer 4 before or after arranging the insert 7; and Joining the insert 7 to the blade 3 by vacuum infusion, wherein the insert 7 is materially bonded to the blade 3.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of joining a first blade module (1) and a second blade module (2) of a blade (3) for a wind turbine to each other, the method comprising steps of:
Applying a hot melt adhesive layer (4) to an inner or outer shell surface (5) of the first blade module (1) and/or an inner or outer shell surface (6) of the second blade module (2);
Aligning the first and second blade modules (1, 2) to each other;
Arranging a joining insert (7) at a joining interface of the first and second blade modules (1, 2) so that the joining insert (7) is in contact with the hot melt adhesive layer (4) ;
Heating the hot melt adhesive layer (4); and
Joining the first and second blade modules (1, 2) via the joining insert (4) to each other by vacuum infusion, wherein the joining insert (4) is materially bonded to the first and second blade modules (1, 2).

2. The method according to the preceding claim, wherein the hot melt adhesive layer (4) is free of a prepreg, a liquid resin, or a liquid adhesive, and/or wherein the method is free of a step of curing the heated hot melt adhesive layer (4) .

3. The method according to any one of the preceding claims, wherein the hot melt adhesive layer (4) comprises a non-reactive material, preferably a material based on epoxy-amine polymer chains and/or an epoxy material, and/or a reactive material, preferably a polyurethane and/or a recyclate material.

4. The method according to any one of the preceding claims, wherein the hot melt adhesive layer (4) comprises a compound having a chemical structure of general formula I or of general formula II depicted below, 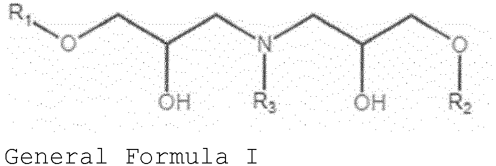 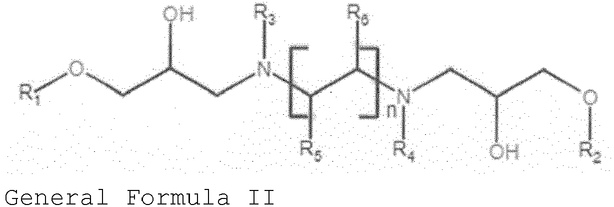 wherein
R¹, R², R³, R⁴, R⁵ and R⁶ independently from each other represent a linear or branched, saturated or unsaturated, substituted or unsubstituted alkyl group; a linear or branched, saturated or unsaturated, substituted or unsubstituted heteroalkyl group; a saturated or unsaturated, substituted or unsubstituted cycloalkyl group; a saturated or unsaturated, substituted or unsubstituted heterocycloalkyl group; a substituted or unsubstituted aryl group; a substituted or unsubstituted heteroaryl group; a linear or branched, substituted or unsubstituted aralkyl group; or a linear or branched, substituted or unsubstituted alkaryl group; and
n represents an integer of from 1 to 10.

5. The method according to the preceding claim, wherein the compound having the chemical structure of general formula I or of general formula II is present in the form of a film, preferably having a film thickness between 25 and 150 pm.

6. The method according to any one of the preceding claims, wherein the step of applying the hot melt adhesive layer (4) comprises at least one of the following:
Cutting the hot melt adhesive layer (4) into a desired shape;
Placing the hot melt adhesive layer (4) at the shell surface (5) of the first blade module (1) and/or the shell surface (6) of the second blade module (2) and punctually fixing the hot melt adhesive layer (4) at spots.

7. The method according to any one of the preceding claims, wherein the step of heating the hot melt adhesive layer (4) comprises at least one of the following:
Ironing the hot melt adhesive layer (4) by means of a hot iron (8);
Applying hot air from a heat gun, infrared light from an infrared light source and/or a heating blanket to the hot melt adhesive layer (4);
Pressing the heated hot melt adhesive layer (4) by means of a tool, preferably a Teflon^{®}-coated tool, to the shell surface (5) of the first blade module (1) and/or the shell surface (6) of the second blade module (2);
Heating the hot melt adhesive layer (4) to a temperature between 100 and 150 °C.

8. The method according to any one of the preceding claims, wherein the joining insert (7) comprises at least one layer of a substrate having reinforcement fibres embedded therein.

9. The method according to any one of the preceding claims, wherein in the step of aligning the first and second blade modules (1, 2), the joining insert (7) is inserted into at least one first recess (9) of the first blade module (1) and into at least one second recess (10) of the second blade module (2), wherein the at least one first recess (9) and the at least one second recess (10) together form at least one common recess.

10. The method according to any one of the preceding claims, wherein the at least one first recess (9) and/or the at least one second recess (10) comprises a tapered recess portion, and the joining insert (7) comprises a complementarily tapered portion, wherein a depth of the tapered recess portion gradually decreases towards an end (12, 12') of the first blade module (1) and/or the second blade module (2), respectively.

11. The method according to claim 9 or 10, wherein the first blade module (1) comprises a plurality of first recesses (9), and the second blade module (2) comprises a plurality of second recesses (10).

12. The method according to any one of claims 9 to 11, wherein the at least one common recess is arranged at a leading edge, a trailing edge, a pressure side, and/or a suction side of the first and second blade modules (1, 2).

13. The method according to any one of claims 9 to 12, wherein the at least one common recess comprises a continuous recess portion around an entire circumference of the first and second blade modules (1, 2).

14. A blade (3) for a wind turbine, the blade (3) comprising a first blade module (1) and a second blade module (2), wherein
the first and second blade modules (1, 2) are aligned to each other with a joining insert (7) arranged at a joining interface of the first and second blade modules (1, 2);
a hot melt adhesive layer (4) is arranged between the joining insert (7) and an inner or outer shell surface (5) of the first blade module (1) and/or an inner or outer shell surface (6) of the second blade module (2); and
the first and second blade modules (1, 2) are joined to each other via the joining insert (7), wherein the joining insert (7) is materially bonded to the first and second blade modules (1, 2).

15. A method of repairing a blade for a wind turbine, the method comprising steps of:
Applying a hot melt adhesive layer to a defective location on an inner or outer shell surface of the blade;
Arranging an insert on the hot melt adhesive layer;
Heating the hot melt adhesive layer before or after arranging the insert; and
Joining the insert to the blade by vacuum infusion, wherein the insert is materially bonded to the blade.
